# FASCICULE DE BREVET EUROPEEN

(11) **EP 2 917 090 B1**
(45) Date de publication et mention de la délivrance du brevet: **05.12.2018**
(21) Numéro de dépôt: 13786525.9
(22) Date de dépôt: 15.10.2013
(51) Int. Cl.: B62D 25/02, B62D 25/04

(54) **STRUCTURE D'UN CÔTÉ DE CAISSE D'UN VÉHICULE AUTOMOBILE ET VÉHICULE AUTOMOBILE COMPORTANT UNE TELLE STRUCTURE**
STRUKTUR EINER SEITENWAND EINES KRAFTFAHRZEUGS UND KRAFTFAHRZEUG MIT SOLCH EINER STRUKTUR
STRUCTURE OF A BODY SIDE PANEL OF A MOTOR VEHICLE, AND MOTOR VEHICLE HAVING SUCH A STRUCTURE

(30) Priorité: 09.11.2012 FR 1260670
(43) Date de publication de la demande: 16.09.2015
(73) Titulaire: Renault S.A.S., 92100 Boulogne-Billancourt (FR)
(72) Inventeur: JAMEUX, Jean-Paul, F-78960 Voisins Le Bretonneux (FR); GOERES, Jean-Marie, F-78530 Buc (FR)
(86) Numéro de dépôt international: PCT/FR2013/052460
(87) Numéro de publication internationale: WO 2014/072599

(56) Documents cités:
- EP-A2- 1 241 079
- DE-A1- 19 946 013
- JP-A- 2011 195 110
- US-A1- 2005 046 238

## Description

### Domaine technique de l'invention

L'invention concerne la structure de la caisse d'un véhicule automobile, notamment une structure d'un côté de caisse d'un véhicule automobile.

L'invention concerne plus particulièrement une structure d'un côté de caisse d'un véhicule automobile, comportant au moins :
- un premier montant de structure avant, ou pied avant,
- un second montant de structure central, ou pied milieu, délimitant avec ledit premier montant du structure avant une première ouverture destinée à recevoir une première porte latérale avant,
- un troisième montant de structure arrière, ou pied arrière, délimitant avec ledit second montant de structure central une seconde ouverture destinée à recevoir une seconde porte latérale arrière,
- une pièce inférieure longitudinale, ou pièce de fermeture, délimitant en partie basse avec lesdits premier, second et troisième montants de structure lesdites première et seconde ouvertures pour lesdites portes latérales associées, et comportant :
   ∘ une première portion avant, ou portion principale, comprenant une première extrémité liée au premier montant de structure avant associé et une seconde extrémité agencée au niveau d'une zone de liaison entre lesdits montants de structure central et arrière,
   ∘ une seconde portion arrière, ou portion interchangeable, comprenant une première extrémité, liée à la première portion avant au niveau de ladite zone de liaison, et une seconde extrémité, liée au troisième montant de structure arrière associé.

### Etat de la technique

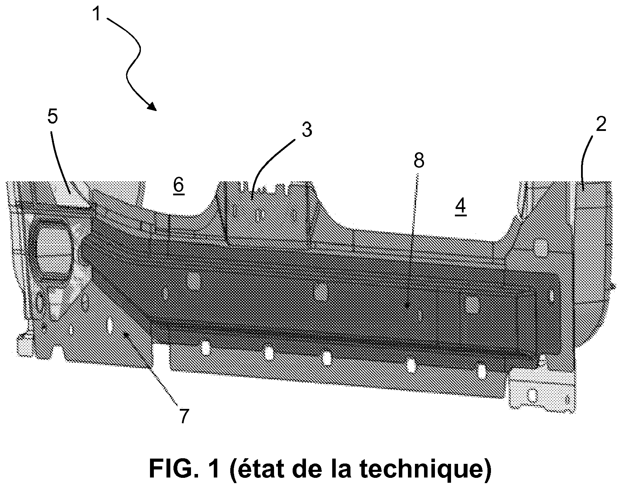

Un véhicule automobile comporte classiquement une structure composée au moins d'un côté de caisse qui délimite sensiblement deux ouvertures pour coopérer avec deux portes latérales. Comme représenté plus particulièrement sur la figure 1, une structure 1 d'un côté de caisse comporte classiquement un premier montant de structure 2 avant, ou pied avant, et un second montant de structure 3 central, ou pied milieu, délimitant avec le pied avant une première ouverture 4 destinée à recevoir une porte latérale avant (non représentée sur la figure 1 pour des raisons de clarté). La structure 1 comporte également un troisième montant de structure 5 arrière, ou pied arrière, délimitant avec le pied milieu une seconde ouverture 6 destinée à recevoir une porte latérale arrière (non représentée sur la figure 1 pour des raisons de clarté).

Par ailleurs, la structure 1 du côté de caisse comporte également et classiquement une pièce inférieure longitudinale 7, ou pièce de fermeture, ou fermeture de bavolet, formant une partie inférieure du côté de caisse et délimitant notamment les ouvertures 4 et 6 pour les portes latérales associées avec les pieds avant 2, milieu 3 et arrière 5.

Pour répondre aux différents critères de chocs, la structure 1 comporte également une pièce de renfort 8, ou renfort de bavolet, destinée à coopérer avec la pièce inférieure longitudinale 7, notamment par des sections complémentaires, le renfort 8 venant s'accoster sur la pièce inférieure longitudinale 7, et destinée surtout à renforcer le côté de caisse en cas de chocs, notamment en cas de choc frontal et latéral.

Toutefois, une telle structure 1 ne présente pas toutes les garanties suffisantes en termes notamment de coûts et d'investissements. Plus particulièrement, la pièce inférieure longitudinale 7 est monobloc, spécifique à chaque véhicule considéré, ce qui génère des investissements importants dès lors que l'on souhaite faire varier l'empattement du côté de caisse entre différents types de véhicule. Par ailleurs, la nécessité d'un renfort de bavolet 8 engendre également une multiplication des références de pièces et donc un surcoût associé.

De même, les solutions décrites dans les documents EP 1 241 079, DE 199 46 013 et US 2005/046238 décrivent certes des solutions de pièces interchangeables pour faire localement office de renfort de la pièce inférieure longitudinale. Toutefois, la forme et les dimensions de telles pièces sont très liées au type de véhicule considéré, ce qui là encore génère des investissements importants.

Le document EP1241079 décrit une structure de côté de caisse comprenant certes des portions avant et arrière distinctes mais celles-ci sont réalisées dans un même matériau et ne permettent pas de gérer une diversité de types de véhicule automobile à moindre investissement associée à une bonne tenue aux chocs frontaux.

### Objet de l'invention

L'invention a pour but de remédier à l'ensemble des inconvénients précités et a pour objet la réalisation d'une structure d'un côté de caisse d'un véhicule automobile qui permette de répondre aux différents critères de sécurité, tout en permettant une diversité plus simple selon le type de véhicule considéré et à moindre coûts.

L'objet de l'invention est caractérisé, plus particulièrement, par le fait que ladite portion interchangeable de ladite pièce inférieure longitudinale comporte une longueur prédéterminée, dépendant de la structure associée au type de véhicule automobile considéré, ladite seconde portion arrière de la pièce inférieure longitudinale étant réalisée en acier doux et comportant une nervure emboutie s'étendant sensiblement uniquement sur une partie de sa longueur, ladite première portion avant de ladite pièce inférieure longitudinale étant réalisée en acier à très haute limite élastique.

Une telle structure permet ainsi de pouvoir changer uniquement une portion arrière de la pièce inférieure longitudinale, distincte de la portion principale, selon le véhicule considéré, de sorte notamment à optimiser le nombre de pièces et les investissements associés.

D'autres avantages et caractéristiques de l'invention peuvent être considérées isolément ou en combinaison :
- Ladite première portion avant de ladite pièce inférieure longitudinale peut comporter une section délimitant une première nervure emboutie, s'étendant sensiblement sur toute la longueur de ladite première portion avant.
- Ladite seconde portion arrière de ladite pièce inférieure longitudinale peut comporter une section délimitant une seconde nervure emboutie, s'étendant dans le prolongement de ladite première nervure emboutie de ladite première portion avant et uniquement sur une partie de la longueur de ladite seconde portion arrière.
- Lesdites première et seconde nervures peuvent avoir une section en U ouvert vers l'extérieur de la structure.
- Ladite première portion avant de ladite pièce inférieure longitudinale peut comporter une patte de fixation, destinée à être recouverte par un bord de ladite seconde portion arrière de ladite pièce inférieure longitudinale au niveau de ladite zone de liaison, de sorte à permettre la solidarisation, par exemple par points de soudure, des deux portions avant et arrière l'une avec l'autre, pour former ladite pièce inférieure longitudinale.

L'invention a également pour but la réalisation d'un véhicule automobile, dont la structure de côté de caisse peut être modifiée facilement (pas de modifications structurelles importantes) et à moindre coûts selon le type de véhicule automobile considéré.

Cet objet de l'invention est caractérisé, plus particulièrement, en ce qu'il comporte une telle structure d'un côté de caisse.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue en perspective d'une partie d'une structure d'un côté de caisse selon l'art antérieur.
La figure 2 représente une vue en perspective d'une partie d'un premier mode particulier de réalisation d'une structure d'un côté de caisse selon l'invention.
La figure 3 représente une vue agrandie partielle de la structure du côté de caisse selon la figure 2.
La figure 4 représente une vue en perspective d'une partie d'une variante de réalisation d'une structure d'un côté de caisse selon l'invention.
La figure 5 représente une vue en perspective d'une partie des modes particuliers de réalisation des structures de côté de caisse selon les figures 2 à 4, représentées schématiquement en superposition l'une sur l'autre.

### Description de modes particuliers de réalisation

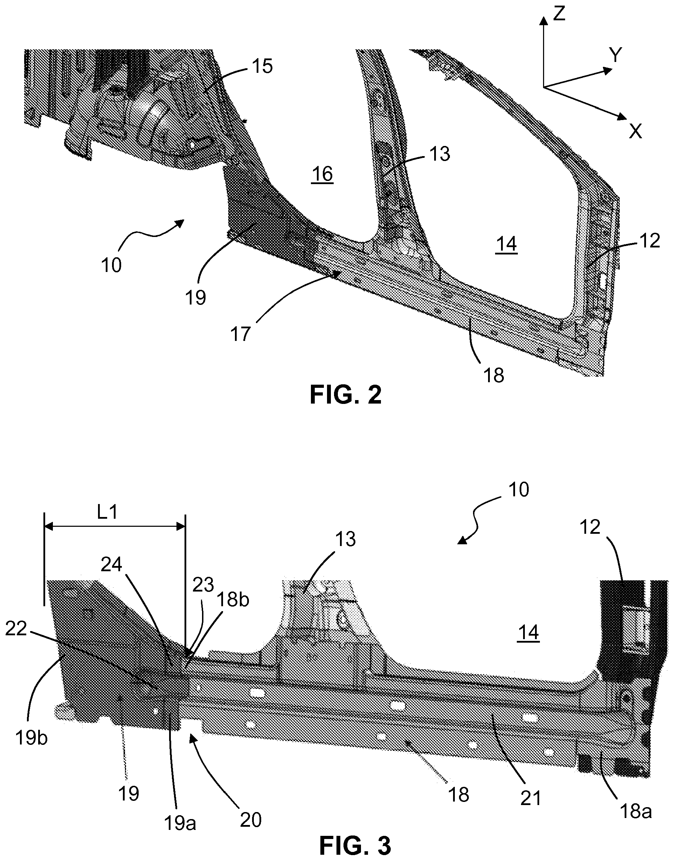

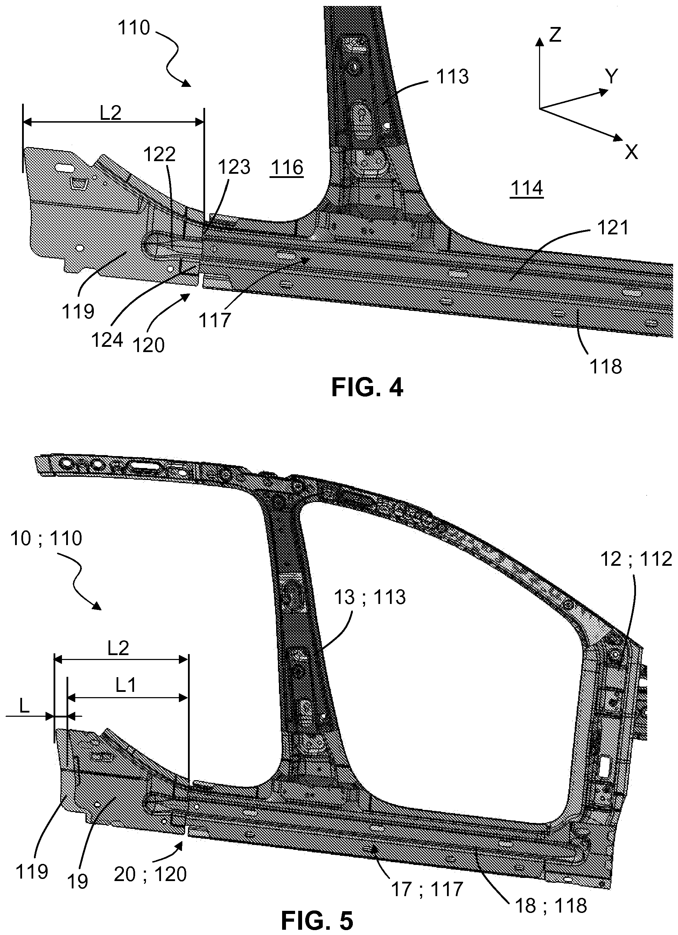

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur les figures 2 et 4 et aux définitions données dans la description. Notamment, la direction longitudinale X correspond au sens de déplacement en marche avant d'un véhicule automobile (non représenté sur les figures pour des raisons de clarté).

En référence aux figures 2 à 5, la structure 10, 110 d'un côté de caisse selon l'invention est destinée à s'adapter de façon simple et peu coûteuse au type de véhicule à considérer. Plus particulièrement, selon le type de véhicule automobile, la structure du côté de caisse est adaptée par le changement d'une unique pièce composant la pièce inférieure longitudinale au lieu de modifier de façon plus complexe l'ensemble des pièces environnantes

Sur les figures 2 et 3, le premier mode particulier de réalisation de la structure 10 comporte un premier montant de structure 12 avant, ou pied avant, et un second montant de structure 13 central, ou pied milieu, délimitant avec le pied avant 12 une première ouverture 14 pour une première porte latérale avant (non représentée sur les figures pour des raisons de clarté). La structure 10 comporte également un troisième montant de structure 15 arrière, ou pied arrière, délimitant avec le pied milieu 13 une seconde ouverture 16 pour une seconde porte latérale arrière (non représentée sur les figures pour des raisons de clarté).

La structure 10 selon l'invention comporte également une pièce inférieure longitudinale 17, ou pièce de fermeture, ou pièce de fermeture de bavolet, délimitant les deux ouvertures 14 et 16 pour les portes latérales avec les pieds avant 12, milieu 13 et arrière 15. Selon l'invention, la pièce inférieure longitudinale 17 comporte une première portion avant 18, ou portion principale, et une seconde portion arrière 19, ou portion interchangeable, laquelle portion interchangeable 19 est destinée à être changée selon le type de structure 10 associée au véhicule automobile considéré. Plus particulièrement, la portion interchangeable 19 présente une longueur L1 (figure 3) correspondant à un premier type de structure 10 de côté de caisse associé à un premier type de véhicule automobile, par exemple du type berline quatre ou cinq portes.

Sur la figure 3, la portion principale 18 de la pièce inférieure longitudinale 17 comprend une première extrémité 18a liée au pied avant 12 de la structure 10, par exemple par des points de soudure, et une seconde extrémité 18b agencée sensiblement entre le pied milieu 13 et le pied arrière 15 de la structure 10, plus particulièrement au niveau d'une zone de liaison 20. La portion interchangeable 19 comprend quant à elle une première extrémité 19a liée à la portion principale 18 au niveau de la zone de liaison 20 et une seconde extrémité 19b liée au pied arrière 15, par exemple par des points de soudure.

Sur les figures 2 et 3, la portion avant 18 de la pièce inférieure longitudinale 17 comporte une section délimitant une nervure emboutie 21, de préférence en forme de U ouvert vers l'extérieur de la structure 10, s'étendant sensiblement sur toute la longueur de la portion avant 18. Une telle nervure emboutie 21, agencée entre le pied avant 12 et le pied milieu 13 permet notamment d'avoir une bonne inertie de la structure en cas de choc latéral, sans ajout de renfort au niveau de cette zone de bavolet (contrairement aux solutions de l'état de la technique), ce qui permet ainsi des économies de pièces et ce qui permet de diminuer les épaisseurs des pièces et ce qui permet des gains en termes de prix de revient de la pièce inférieure longitudinale 17.

Par ailleurs, la portion interchangeable 19 de la pièce inférieure longitudinale 17 comporte également une section délimitant une nervure emboutie 22, de préférence également en forme de U ouvert vers l'extérieur de la structure 10, s'étendant dans le prolongement de la nervure emboutie 21 de la portion principale 18 avant. Dans le mode particulier de réalisation représenté sur les figures 2 et 3, la nervure emboutie 22 de la portion interchangeable 19 s'étend sensiblement uniquement sur une partie de la longueur de la portion interchangeable 19. Une telle nervure emboutie 22 sur la pièce interchangeable 19 permet de gérer au mieux les efforts, notamment car les efforts relatifs au choc frontal sont beaucoup moins importants dans cette zone, à savoir à l'arrière du bavolet du véhicule automobile.

Par ailleurs, la zone de liaison 20 entre les deux portions principale 18 et interchangeable 19 de la pièce inférieure longitudinale 17 est définit plus particulièrement par une patte de fixation 23 de la portion principale 18 avant, destinée à être recouverte par un bord 24 associé de la portion interchangeable 19 arrière. La solidarisation des deux portions principale 18 avant et interchangeable 19 arrière se fait, de préférence, par l'intermédiaire de points de soudure.

A titre d'exemple, la portion avant principale 18 de la pièce inférieure longitudinale 17 est réalisée en acier à très haute limite élastique (ou « THLE » pour « Très Haute Limite Elastique »), pour résister au mieux à un choc frontal/latéral. De même, la portion arrière interchangeable 19 de la pièce inférieure longitudinale 17 est réalisée en acier doux, car cette portion de la pièce inférieur longitudinale 17 est moins sollicitée lors d'un choc frontal/latéral.

Dans la variante de réalisation représentée sur la figure 4, la structure 110 de côté de caisse selon l'invention se distingue uniquement du premier mode de réalisation représenté sur les figures 2 et 3 par la pièce inférieure longitudinale 117 de la structure 110, notamment par sa portion arrière 119 interchangeable. Plus particulièrement, la structure 110 de côté de caisse comporte les mêmes éléments, à savoir le pied avant 112 et le pied milieu 113, qui délimitent la première ouverture 114 pour la porte latérale associée, et le pied arrière (non représenté sur la figure 4 pour des raisons de clarté), qui délimite avec le pied milieu 113 la seconde ouverture 116 pour la porte latérale associée, et la pièce inférieure longitudinale 117. Celle-ci comporte également une portion avant 118 principale et une portion arrière 119 interchangeable. Selon l'invention, la portion arrière 119 interchangeable présente une longueur L2 (figure 4) correspondant à un second type de structure 110 de côté de caisse associée à un second type de véhicule automobile, par exemple du type break ou véhicule « tricorps », plus généralement pour un véhicule dont l'empattement est différent d'un véhicule classique de type berline (comme sur les figures 2 et 3).

Comme pour le premier mode de réalisation, la portion avant 118 principale comporte une première extrémité 118a liée au pied avant 112 et une seconde extrémité 118b liée à la portion arrière 119 interchangeable au niveau au niveau de la zone de liaison 120, par exemple par l'intermédiaire de points de soudure. De même, la portion arrière 119 interchangeable comporte une première extrémité 119a liée à la portion avant 118 principale au niveau de la zone de liaison 120 et une seconde extrémité 119b liée au pied arrière 115. La portion avant 118 principale comporte une section délimitant une nervure emboutie 121 et la portion arrière 119 interchangeable comporte une section délimitant une nervure emboutie 122, s'étendant dans le prolongement de la nervure emboutie 121 de la portion avant 118 principale. Avantageusement, la portion avant 118 principale comporte une patte 123, destinée à être recouverte par un bord 124 de la portion arrière 119 interchangeable.

Comme représenté plus particulièrement sur la figure 5, sur laquelle les deux variantes de réalisation de la structure 10 de côté de caisse selon les figures 2 et 3 et de la structure 110 de côté de caisse selon la figure 4 sont représentées en superposition, la portion arrière 119 interchangeable de la pièce inférieure longitudinale 117 de la structure 110 de côté de caisse présente ainsi une longueur L2 supérieure à la longueur L1 de la portion arrière 19 interchangeable de la pièce inférieure longitudinale 17 de la structure 10 de côté de caisse.

A titre d'exemple, l'écart L, ou différence, entre la longueur L2 de la pièce interchangeable 119 et la longueur L1 de la pièce interchangeable 19 est de l'ordre de 46mm. Encore à titre d'exemple, la portion avant principale 118 de la pièce inférieure longitudinale 117 est réalisée en acier à très haute limite élastique. De même, la portion arrière interchangeable 119 de la pièce inférieure longitudinale 117 peut être réalisée en acier à très haute limite élastique ou en acier doux.

Ainsi, quel que soit le mode de réalisation de la structure 10, 110 selon l'invention, celle-ci présente l'avantage principale de pouvoir gérer la diversité des véhicules automobiles considérés, en ajustant uniquement une portion interchangeable d'un élément de structure de côté de caisse. Le dimensionnement de la zone du bavolet, en termes de comportement en cas de choc frontal, latéral et vibratoire est optimisé, de par le nombre de pièces et les matières utilisées. Il en résulte donc un gain indéniable en termes de gestion économique de la diversité de l'empattement entre les différents véhicules considérés et en termes d'optimisation des investissements industriels.

L'invention n'est pas limitée aux différents modes de réalisation décrits ci-dessus. Notamment, la forme et les dimensions des portions avant principale 18, 118 et arrière interchangeable 19, 119 de la pièce inférieure longitudinale 17, 117 de la structure 10, 110 de côté de caisse sont non limitatives et dépendent notamment de la taille de la structure 10, 110 considérée et du type de véhicule automobile associé.

Par ailleurs, les longueurs L1 de la portion arrière 19 interchangeable du premier mode de réalisation de la structure 10 de côté de caisse et L2 de la portion arrière 119 interchangeable du second mode de réalisation de la structure 110 de côté de caisse peuvent être différentes, tant que la pièce inférieure longitudinale 17, 117 comporte une portion avant 18, 118 principale et une portion arrière 19, 119 interchangeable pour la structure 10, 110 de côté de caisse.

L'invention s'applique plus particulièrement à tout type de véhicule automobile dont la structure de côté de caisse est différente selon le modèle du véhicule et qui puisse être modifiée à moindre coûts et sans changements structurels profonds.

## Revendications

1. Structure (10 ; 110) d'un côté de caisse d'un véhicule automobile, comportant au moins :
- un premier montant de structure (12 ; 112) avant, ou pied avant,
- un second montant de structure (13; 113) central, ou pied milieu, délimitant avec ledit premier montant du structure (12 ; 112) avant une première ouverture (14 ; 114) destinée à recevoir une première porte latérale avant,
- un troisième montant de structure (15 ; 115) arrière, ou pied arrière, délimitant avec ledit second montant de structure (13 ; 113) central une seconde ouverture (16 ; 116) destinée à recevoir une seconde porte latérale arrière,
- une pièce inférieure longitudinale (17 ; 117), ou pièce de fermeture, délimitant en partie basse avec lesdits premier (12 ; 112), second (13 ; 113) et troisième (15 ; 115) montants de structure lesdites première (14; 114) et seconde (16; 116) ouvertures pour lesdites portes latérales associées, et comportant :
∘ une première portion avant (18; 118), ou portion principale, comprenant une première extrémité (18a ; 118a) liée au premier montant de structure (12 ; 112) avant associé et une seconde extrémité (18b ; 118b) agencée au niveau d'une zone de liaison (20 ; 120) entre lesdits montants de structure central (13 ; 113) et arrière (15 ; 115),
∘ une seconde portion arrière (19; 119), ou portion interchangeable, comprenant une première extrémité (19a ; 119a), liée à la première portion avant (18 ; 118) au niveau de ladite zone de liaison (20 ; 120), et une seconde extrémité (19b ; 119b), liée au troisième montant de structure (15 ; 115) arrière associé,
**structure (10 ; 110) caractérisée en ce que** ladite portion interchangeable (19; 119) de ladite pièce inférieure longitudinale (17 ; 117) comporte une longueur (L1, L2) prédéterminée, dépendant de la structure (10; 110) associée au type de véhicule automobile considéré,
**et en ce que** ladite seconde portion arrière (19 ; 119) de ladite pièce inférieure longitudinale (17 ; 117) est réalisée en acier doux, **et en ce que** ladite première portion avant (18 ; 118) de ladite pièce inférieure longitudinale (17 ; 117) est réalisée en acier à très haute limite élastique.

2. Structure (10 ; 110) selon la revendication précédente, **caractérisée en ce que** ladite première portion avant (18; 118) de ladite pièce inférieure longitudinale (17 ; 117) comporte une section délimitant une première nervure (21 ; 121) emboutie, s'étendant sensiblement sur toute la longueur de ladite première portion avant (18 ; 118).

3. Structure (10 ; 110) selon la revendication précédente, **caractérisée en ce que** ladite seconde portion arrière (19; 119) de ladite pièce inférieure longitudinale (17 ; 117) comporte une section délimitant une seconde nervure (22; 122) emboutie, s'étendant dans le prolongement de ladite première nervure (21 ; 121) emboutie de ladite première portion avant (18 ; 118) et uniquement sur une partie de la longueur (L1, L2) de ladite seconde portion arrière (19 ; 119).

4. Structure (10 ; 110) selon la revendication précédente, **caractérisée en ce que** lesdites première (21 ; 121) et seconde (22 ; 122) nervures ont une section en U ouvert vers l'extérieur de la structure (10 ; 110).

5. Structure (10 ; 110) selon l'une quelconque des revendications précédentes, **caractérisée en ce que** ladite première portion avant (18 ; 118) de ladite pièce inférieure longitudinale (17 ; 117) comporte une patte de fixation (23 ; 123), destinée à être recouverte par un bord (24 ; 124) de ladite seconde portion arrière (19 ; 119) de ladite pièce inférieure longitudinale (17 ; 117) au niveau de ladite zone de liaison (20; 120), de sorte à permettre la solidarisation des deux portions avant (18 ; 118) et arrière (19 ; 119) l'une avec l'autre, pour former ladite pièce inférieure longitudinale (17 ; 117).

6. Structure (10 ; 110) selon la revendication précédente, **caractérisée en ce que** ladite solidarisation est réalisée par points de soudure.

7. Véhicule automobile, **caractérisé en ce qu'**il comporte une structure (10 ; 110) de côté de caisse selon l'une quelconque des revendications précédentes.

## Patentansprüche

1. Struktur (10; 110) einer Karosserie-Seitenwand eines Kraftfahrzeugs, die mindestens aufweist:
- einen vorderen ersten Strukturpfosten (12; 112) oder A-Säule,
- einen zweiten mittigen Strukturpfosten (13; 113) oder B-Säule, welcher mit dem vorderen ersten Strukturpfosten (12; 112) eine erste Öffnung (14; 114) zum Empfang einer vorderen ersten Seitentür begrenzt,
- einen hinteren dritten Strukturpfosten (15; 115) oder C-Säule, welcher mit dem zweiten mittigen Strukturpfosten (13; 113) eine zweite Öffnung (16; 116) zum Empfang einer hinteren zweiten Seitentür begrenzt,
- ein längliches unteres Teil (17; 117) oder Abschlussteil, welches im unteren Teil mit dem ersten (12; 112), zweiten (13; 113) und dritten (15; 115) Strukturpfosten die erste (14; 114) und zweite (16; 116) Öffnung für die zugeordneten Seitentüren begrenzt und aufweist:
∘ einen vorderen ersten Abschnitt (18; 118) oder Hauptabschnitt, umfassend ein erstes Ende (18a; 118a), das mit dem zugeordneten vorderen ersten Strukturpfosten (12; 112) verbunden ist, und ein zweites Ende (18b; 118b), das im Bereich einer Verbindungszone (20; 120) zwischen dem mittigen (13; 113) und hinteren (15; 115) Strukturpfosten ausgebildet ist,
∘ einen hinteren zweiten Abschnitt (19; 119) oder austauschbaren Abschnitt, umfassend ein erstes Ende (19a; 119a), das mit dem vorderen ersten Abschnitt (18; 118) im Bereich der Verbindungszone (20; 120) verbunden ist, und ein zweites Ende (19b; 119b), das mit dem zugeordneten hinteren dritten Strukturpfosten (15; 115) verbunden ist,
wobei die Struktur (10; 110) **dadurch gekennzeichnet ist, dass** der austauschbare Abschnitt (19; 119) des länglichen unteren Teils (17; 117) eine vorbestimmte Länge (L1, L2) aufweist, die von der dem betrachteten Kraftfahrzeugtyp zugeordneten Struktur (10; 110) abhängt,
und dass der hintere zweite Abschnitt (19; 119) des länglichen unteren Teils (17; 117) aus weichem Stahl hergestellt ist,
und dass der vordere erste Abschnitt (18; 118) des länglichen unteren Teils (17; 117) aus Stahl mit sehr hoher Elastizitätsgrenze hergestellt ist.

2. Struktur (10; 110) nach vorangehendem Anspruch, **dadurch gekennzeichnet, dass** der vordere erste Abschnitt (18; 118) des länglichen unteren Teils (17; 117) einen Querschnitt aufweist, der eine erste tiefgezogene Rippe (21; 121) begrenzt, die sich etwa über die gesamte Länge des vorderen ersten Abschnitts (18; 118) erstreckt.

3. Struktur (10; 110) nach vorangehendem Anspruch, **dadurch gekennzeichnet, dass** der hintere zweite Abschnitt (19; 119) des länglichen unteren Teils (17; 117) einen Querschnitt aufweist, der eine zweite tiefgezogene Rippe (22; 122) begrenzt, die sich in der Verlängerung der ersten tiefgezogenen Rippe (21; 121) des vorderen ersten Abschnitts (18; 118) und nur über einen Teil der Länge (L1, L2) des hinteren zweiten Abschnitts (19; 119) erstreckt.

4. Struktur (10; 110) nach vorangehendem Anspruch, **dadurch gekennzeichnet, dass** die erste (21; 121) und zweite (22; 122) Rippe einen Querschnitt eines nach außen der Struktur (10; 110) offenen Us haben.

5. Struktur (10; 110) nach einem der vorangehenden Ansprüche, **dadurch gekennzeichnet, dass** der vordere erste Abschnitt (18; 118) des länglichen unteren Teils (17; 117) eine Befestigungslasche (23; 123) aufweist, die bestimmt ist, von einem Rand (24; 124) des hinteren zweiten Abschnitts (19; 119) des länglichen unteren Teils (17; 117) im Bereich der Verbindungszone (20; 120) derart bedeckt zu sein, dass die feste Verbindung der zwei Abschnitte, des vorderen (18; 118) und hinteren (19; 119), aneinander erlaubt ist, um das längliche untere Teil (17; 117) zu bilden.

6. Struktur (10; 110) nach vorangehendem Anspruch, **dadurch gekennzeichnet, dass** die feste Verbindung mit Schweißpunkten hergestellt ist.

7. Kraftfahrzeug, **dadurch gekennzeichnet, dass** es eine Struktur (10; 110) einer Karosserie-Seitenwand nach einem der vorangehenden Ansprüche aufweist.

## Claims

1. Structure (10; 110) of a body side panel of a motor vehicle, comprising at least:
- a first front structural upright (12; 112) or front pillar,
- a second central structural upright (13; 113) or central pillar which, with said first front structural upright (12; 112), delimits a first opening (14; 114) intended to receive a first front side door,
- a third rear structural upright (15; 115) or rear pillar which, with said second central structural upright (13; 113), delimits a second opening (16; 116) intended to receive a second rear side door,
- a lower longitudinal member (17; 117) or closing member which, with said first (12; 112), second (13; 113) and third (15; 115) structural uprights, delimits at the bottom said first (14; 114) and second (16; 116) openings for said associated side doors and comprises:
∘ a first front portion (18; 118) or main portion, comprising a first end (18a; 118a) connected to said associated first front structural upright (12; 112), and a second end (18b; 118b) arranged at a connecting zone (20; 120) between said central (13; 113) and rear (15; 115) structural uprights,
∘ a second rear portion (19; 119) or interchangeable portion, comprising a first end (19a; 119a) connected to the first front portion (18; 118) at said connecting zone (20; 120), and a second end (19b; 119b) connected to said associated third rear structural upright (15; 115),
which structure (10; 110) is **characterized in that** said interchangeable portion (19; 119) of said lower longitudinal member (17; 117) comprises a predefined length (L1, L2) depending on the structure (10; 110) associated with the type of motor vehicle concerned, and **in that** said second rear portion (19; 119) of said lower longitudinal member (17; 117) is made of soft steel,
and **in that** said first front portion (18; 118) of said lower longitudinal member (17; 117) is made of steel with a very high elastic limit.

2. Structure (10; 110) according to the preceding claim, **characterized in that** said first front portion (18; 118) of said lower longitudinal member (17; 117) comprises a section delimiting a stamped rib (21; 121) extending substantially over the entire length of said first front portion (18; 118).

3. Structure (10; 110) according to the preceding claim, **characterized in that** said second rear portion (19; 119) of said lower longitudinal member (17; 117) comprises a section delimiting a second stamped rib (22; 122) extending in the continuation of said first stamped rib (21; 121) of said first front portion (18; 118) and only over part of the length (L1, L2) of said second rear portion (19; 119).

4. Structure (10; 110) according to the preceding claim, **characterized in that** said first (21; 121) and second (22; 122) ribs have a U-shaped cross-section open towards the exterior of the structure (10; 110).

5. Structure (10; 110) according to any one of the preceding claims, **characterized in that** said first front portion (18; 118) of said lower longitudinal member (17; 117) comprises a fixing lug (23; 123) intended to be covered by an edge (24; 124) of said second rear portion (19; 119) of said lower longitudinal member (17; 117) at said connection zone (20; 120), so as to allow the two front (18; 118) and rear (19; 119) portions to be rigidly connected together in order to form said lower longitudinal member (17; 117).

6. Structure (10; 110) according to the preceding claim, **characterized in that** said connection is formed by weld points.

7. Motor vehicle, **characterized in that** it comprises a body side panel structure (10; 110) according to any one of the preceding claims.
